# EUROPEAN PATENT APPLICATION

(11) **EP 4 582 175 A1**
(43) Date of publication of application: **09.07.2025**
(21) Application number: 24219502.2
(22) Date of filing: 12.12.2024
(51) Int. Cl.: B01F 27/07, B01F 27/90, B01F 27/921, B01F 27/96

(54) **AGITATOR**

(30) Priority: 05.01.2024 KR 20240002486
(71) Applicant: SAMSUNG SDI CO., LTD., Yongin-si, Gyeonggi-do 17084 (KR)
(72) Inventor: KO, Youngsan, 17084 Yongin-si (KR); HWANG, Wook Ryol, 52828 Jinju-si (KR); CHOI, Hyeon Woo, 52696 Jinju-si (KR); YOU, Hyun Dong, 52523 Sacheon-si (KR); SEONG, Min Jong, 52860 Jinju-si (KR)
(74) Representative: Marks & Clerk LLP

(57) **Abstract**

An agitator according to embodiments of the present disclosure includes: an agitation tank (100); a rotation shaft (200) that is installed to rotate within the agitation tank; a first wing portion (310) that is connected to the rotation shaft and includes a plurality of wings (31,32) parallel to the rotation shaft; and a second wing portion (320) that is connected to the rotation shaft and includes a band-shaped wing (42) forming a spiral, i.e. screw thread, along the rotation shaft.

## Description

### BACKGROUND

### 1. Field

The present disclosure relates to an agitator, and more particularly, to an agitator for mixing a slurry for a rechargeable battery.

### 2. Description of the Related Art

A rechargeable battery includes a positive electrode, a negative electrode, and a separator. The positive electrode and the negative electrode include a substrate that is a thin metal plate and an active material layer on the substrate.

The active material layer is formed by applying a slurry in which an active material, a binder, a conductive material, and the like that are suitable for positive and negative electrode characteristics are mixed.

To reduce a defect rate of a process for manufacturing the electrode and to improve homogeneity of the process, flowability or a rheological property of the slurry is important, and the rheological property is affected by the material composition and the particle dispersion of the slurry.

If the slurry is agitated, the slurry tends to move to an upper end portion that is a gas-liquid boundary. Thus, a phenomenon in which particles are separated occurs and quality of the slurry is thereby reduced.

### SUMMARY

The present disclosure relates to various embodiments of an agitator configured to uniformly or substantially uniformly mix a slurry used in manufacturing a rechargeable battery by reducing a separation phenomenon of the slurry.

An agitator according to embodiments of the present disclosure includes: an agitation tank; a rotation shaft accommodated and configured to rotate within the agitation tank; a first wing portion connected to the rotation shaft and including wings substantially parallel to the rotation shaft; and a second wing portion connected to the rotation shaft and including a band-shaped wing forming a spiral (i.e. screw thread) along the rotation shaft.

The first wing portion may include: a pair of first wings and a pair of second wings that are substantially parallel to the rotation shaft; a third wing that connects the first wing and the rotation shaft; and a fourth wing that connects the second wing and the rotation shaft.

The second wing portion may further include an auxiliary rotation shaft that has a through hole and is fixed to the rotation shaft inserted into the through hole. The band-shaped wing may surround an outer surface of the auxiliary rotation shaft.

The auxiliary rotation shaft may extend along a length direction of the rotation shaft, and the third wing may be below the auxiliary rotation shaft.

The third wing may be at an intermediate portion of the first wing.

A ratio of pitch of the spiral to a width of the first wing portion may be in a range from (approximately) 0.4 to (approximately) 0.5.

A ratio of a width of the band-shaped wing to a width of the first wing portion may be in a range from (approximately) 0.4 to (approximately) 0.5.

A height of the second wing portion may be greater than or equal to 1/2 of a height of the first wing portion, or equal to approximately 1/2 of a height of the first wing portion.

A ratio of a width of the first wing portion to an internal diameter of the agitation tank may be approximately 0.9.

In embodiments of the present disclosure, an agitator capable of preparing a slurry for a rechargeable battery in which particles are uniformly or substantially uniformly mixed by suppressing an upper movement of the slurry may be manufactured.

At least some of the above and other features of the invention are set out in the claims.

### BRIEF DESCRIPTION OF THE DRAWINGS

FIG. 1 is a schematic view of an agitator according to embodiments of the present disclosure.
FIG. 2 and FIG. 3 are views for describing a wing portion of the agitator of FIG. 1.

### DETAILED DESCRIPTION

Embodiments of the present disclosure will be described more fully hereinafter with reference to the accompanying drawings so that those skilled in the art easily implement the embodiments. The present disclosure may be modified in various different ways, all without departing from the scope of the present disclosure.

Because sizes and thicknesses of constituent members shown in the drawings are arbitrarily given for better understanding and ease of description, the present disclosure is not limited to the illustrated sizes and thicknesses.

In the drawings, the thickness of layers, films, panels, regions, etc., is exaggerated for clarity. In the drawings, for better understanding and ease of description, thicknesses of some layers and areas are exaggeratedly displayed. It will be understood that when an element such as a layer, film, region, area, or substrate is referred to as being "on" or "above" another element, it may be directly on the other element or intervening elements may also be present.

In addition, unless explicitly described to the contrary, the word "comprise", and variations such as "comprises" or "comprising", will be understood to imply the inclusion of stated elements but not the exclusion of any other elements.

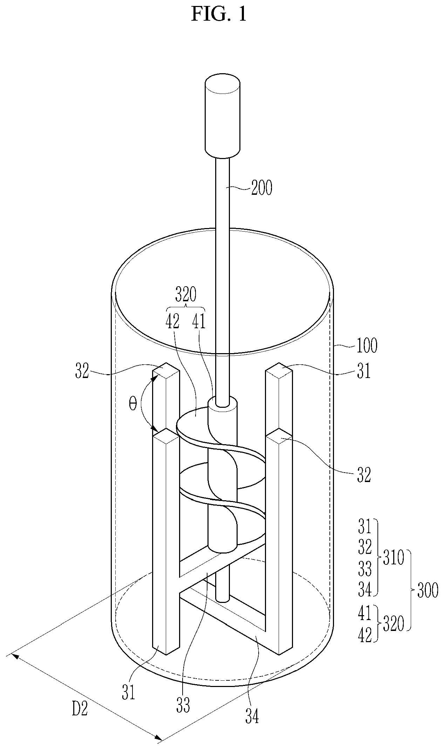

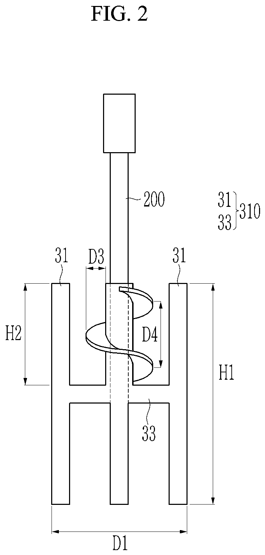

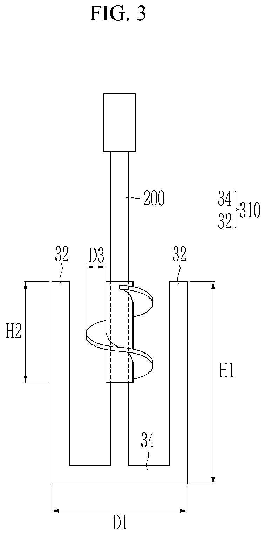

FIG. 1 is a schematic view of an agitator according to embodiments of the present disclosure, and FIG. 2 and FIG. 3 are views of a wing portion of the agitator of FIG. 1.

As shown in FIGS. 1 to 3, the agitator according to the embodiments of the present disclosure may include an agitation tank 100, a rotation shaft 200 (e.g., a rod), and a rotation wing 300. The rotation wing 300 may be coupled (directly and/or indirectly) to the rotation shaft 200.

The agitation tank 100 may have a cylindrical shape to provide an agitation space therein, but the shape of the agitation tank 100 is not limited to the specific shape shown in FIG. 1. The shape of the agitation tank 100 may be any shape in which an internal space may be formed so that each component of the wing portion (described later) is accommodated inside the agitation tank 100. In one or more embodiments, a horizontal cross-sectional shape (i.e., a cross-sectional shape in a horizontal plane) of the agitation tank 100 may have any suitable shape, such as a circular shape, an oval shape, a quadrangular shape, or a polygonal shape.

The rotation wing 300, which may be connected (directly and/or indirectly) to the rotation shaft 200, is configured to rotate in the agitation tank 100 in response to rotation of the rotation shaft 200, e.g. about a rotation axis.

The rotation shaft 200 may be at a center (or substantially a center) of the agitation tank 100 (e.g., the rotation shaft 200 may extend along or substantially along an imaginary axial centerline of the agitation tank 100 - defining the rotation axis). The rotation shaft 200 may be configured rotate within the agitation tank 100 together with the rotation wing 300 to agitate a fluid in the agitation tank 100.

Although in one or more embodiments the rotation shaft 200 may be at the center (or substantially the center) of the agitation tank 100, the present disclosure is not limited thereto. In one or more embodiments, the rotation shaft 200 may be eccentric relative to the center of the agitation tank 100.

The rotation wing 300 may include a first wing portion 310 and a second wing portion 320.

The first wing portion 310 may include a pair of first wings 31 and a pair of second wings 32 that are directly connected to the rotation shaft 200, are separated from the rotation shaft 200 by a predetermined distance, and are parallel (or substantially parallel) to the rotation shaft 200. The first wing portion 310 also includes a third wing 33 connecting the pair of first wings 31 to the rotation shaft 200, and a fourth wing 34 connecting the pair of second wings 32 to the rotation shaft 200.

The pair of first wings 31 may be opposite to each other with the rotation shaft 200 therebetween (e.g., the pair of first wings 31 may be on opposite sides of the rotation shaft 200), and the pair of second wings 32 may be opposite to each other with the rotation shaft 200 therebetween (e.g., the pair of second wings 32 may be on opposite sides of the rotation shaft 200). In some embodiments, the first wings 31 and the second wings 32 may be alternately arranged at a certain angle along a circumference of a cylindrical agitator. In one or more embodiments, four wings may be arranged in an order of one of the first wings 31, one of the second wings 32, the other of the first wings 31, and the other of the second wings 32, each at an angle θ of approximately 90 degrees with respect to the adjacent wings.

The third wing 33 and the fourth wing 34 may be arranged lengthwise in a direction crossing the rotation axis of the rotation shaft 200. The third wing 33 may connect an intermediate portion of the first wing 31 to the rotation shaft 200, and the fourth wing 34 may connect one end of the second wing 32 to the rotation shaft 200. In one or more embodiments, the fourth wing 34 may be divided around or cross the rotation shaft 200 to connect the rotation shaft 200 and the second wings 32, but the present disclosure is not limited thereto. The fourth wing 34 may cross an end portion (e.g., the lower end) of the rotation shaft 200 to connect end portions (e.g., lower ends) of the pair of second wings 32 opposite to each other with the rotation shafted 200 arranged therebetween.

A width D1 of the first wing portion 310 may have a ratio of approximately 9/10 (i.e., 0.9) with respect to an internal diameter D2 of the agitation tank 100.

The second wing portion 320 may include an auxiliary rotation shaft 41 and a band-shaped wing 42 on an outer surface of the auxiliary rotation shaft 41. The second wing portion 320 may be above the third wing 33 along a length direction of the rotation shaft 200, and the band-shaped wing 42 may have a spiral or helical structure or configuration, e.g. defining a screw thread or spiral.

In one or more embodiments, the second wing portion 320 may have the spiral structure in which the band-shaped wing 42, which has a plate shape and a long length in one direction, is wound along the outer surface of the auxiliary rotation shaft 41. The auxiliary rotation shaft 41 may have a through hole through which the rotation shaft 200 passes. After the rotation shaft 200 is inserted into the through hole, the auxiliary rotation shaft 41 may be fixed to the rotation shaft 200 such that the auxiliary rotation shaft 41 and the rotation shaft 200 are configured to be rotated together in response to rotation of the rotation shaft 200, for example about the same rotation axis. The rotation shaft 200 and the auxiliary rotation shaft 41 may be connected by a screw coupling or any other suitable attachment mechanism or means.

The band-shaped wing 42 may not be directly connected to an outer surface of the rotation shaft 200, but may instead be directly connected to the outer surface of the auxiliary rotation shaft 41 through which the rotation shaft 200 extends.

A height H2 of the second wing portion 320 may be greater than or equal to approximately 1/2 of a height H1 of the first wing portion 310. A width D3 of the band-shaped wing 42 measured from the outer surface of the auxiliary rotation shaft 41 may have a ratio in a range from approximately 4/10 (i.e., 0.4) to approximately 5/10 (i.e., 0.5) with respect to the width D1 of the first wing portion 310. In one or more embodiments, the width D3 of the band-shaped wing 42 may not be a length of an inclined surface formed by the band-shaped wing 42 obliquely attached to the outer surface of the auxiliary rotation shaft 41, and may instead be a distance measured in a direction perpendicular to the outer surface of the auxiliary rotation shaft 41 and may be a width measured by a straight-line distance from the outer surface of the auxiliary rotation shaft 41 to an outer end of the band-shaped wing 42.

The band-shaped wing 42 may have a pitch D4 in a range from approximately 0.4 to 0.5 with respect to the width D1 of the first wing portion 310. In one or more embodiments, the pitch D4 may be a distance between adjacent portions of the band-shaped wing 41 protruding furthest outward from the auxiliary rotation shaft 41 along a same side of the auxiliary rotation shaft 41. The band-shaped wing 42 may be formed at a pitch D4 in a range from approximately 0.4 to approximately 0.5 with respect to the internal diameter of the agitation tank 100 along a length direction of the auxiliary rotation shaft 41. For example, the pitch may be a distance between a central portion of a portion most protruding outward and a central portion of a portion most protruding outward.

In one or more embodiments of the present disclosure, the first wing portion 310 having an anchor-type configuration and the second wing portion 320 having a spiral-type configuration are configured to simultaneously mix a slurry, such as an active material. This mixing, in the interior of the agitation tank 100, is beneficial.

If only the first wing portion 310 were connected to the rotation shaft 200 (i.e., the second wing portion 320 was omitted), the slurry may tend move to an upper end portion along the rotation shaft 200, and the slurry may be separated at an upper end portion of the first wing portion 310 so that particles included in the slurry do not disperse. If the slurry is separated, the particles may not be uniformly mixed, and sizes of the particles in the slurry may increase so that the viscosity of the slurry is greater than desired.

In the embodiments of the present disclosure, the second wing portion 320 is included such that a phenomenon in which the slurry moves to an upper end portion and is separated may be mitigated against. Thus, the slurry may be uniformly (or substantially uniformly) mixed by the agitator. The direction of rotation of the rotation shaft can be chosen, taking account of a direction of the spiral, for facilitating this mitigation of the slurry movement.

In some embodiments, the second wing portion 320 may increase a downward flow of the slurry in a central portion of the agitator (e.g., the second wing portion 320 may increase a downward flow of the slurry from an upper end portion that is a gas-liquid boundary to a bottom surface of the agitation tank 100). Thus, the slurry remaining at the gas-liquid boundary may be forcibly moved to a middle portion and a lower portion of the agitator tank 100 so that a material included in the slurry is uniformly (or substantially uniformly) mixed.

In one or more embodiments, the height H2 of the second wing portion 320 may affect a flow of the slurry inside the first wing portion 310, and may have a greater influence on the internal downward flow. In some embodiments, as the height H2 of the second wing portion 320 increases, the downward flow of the slurry in the central portion from the upper end portion that is the gas-liquid boundary to the bottom surface of the agitation tank 100 may become stronger. Thus, the slurry may be uniformly (or substantially uniformly) mixed by adjusting (e.g., increasing) the height H2 of the second wing portion 320.

While this disclosure has been described in connection with what is presently considered to be practical embodiments, it is to be understood that the disclosure is not limited to the disclosed embodiments. On the contrary, it is intended to cover various modifications and equivalent arrangements included within the scope of the appended claims.

### Description of symbols

100: agitation tank
310: first wing portion
320: second wing portion

## Claims

1. An agitator comprising:
an agitation tank;
a rotation shaft accommodated in the agitation tank and configured to rotate within the agitation tank;
a first wing portion coupled to the rotation shaft, the first wing portion comprising a plurality of wings substantially parallel to the rotation shaft; and
a second wing portion coupled to the rotation shaft, the second wing portion comprising a band-shaped wing forming a spiral along the rotation shaft.

2. The agitator as claimed in claim 1, wherein the first wing portion comprises:
a pair of first wings and a pair of second wings that are substantially parallel to the rotation shaft;
a third wing connecting the pair of first wings and the rotation shaft; and
a fourth wing connecting the pair of second wings and the rotation shaft.

3. The agitator as claimed in claim 1 or claim 2, wherein the second wing portion further comprises an auxiliary rotation shaft having a through hole,
wherein the rotation shaft extends into the through hole in the auxiliary rotation shaft and is fixed to the rotation shaft, and
wherein the band-shaped wing surrounds an outer surface of the auxiliary rotation shaft.

4. The agitator as claimed in claim 3, when dependent upon claim 2, wherein the auxiliary rotation shaft extends along a length direction of the rotation shaft, and wherein the third wing is below the auxiliary rotation shaft.

5. The agitator as claimed in claim 4, wherein the third wing is coupled to an intermediate portion of the pair of first wings.

6. The agitator as claimed in any one of the preceding claims, wherein a ratio of a pitch of the spiral to a width of the first wing portion is in a range from 0.4 to 0.5.

7. The agitator as claimed in any one of the preceding claims, wherein a ratio of a width of the band-shaped wing to a width of the first wing portion is in a range from 0.4 to 0.5.

8. The agitator as claimed in any one of the preceding claims, wherein a height of the second wing portion is greater than or equal to 1/2 of a height of the first wing portion.

9. The agitator as claimed in any one of the preceding claims, wherein a ratio of a width of the first wing portion to an internal diameter of the agitation tank is approximately 0.9.
